**Europäisches Patentamt**

**European Patent Office**

**Office européen des brevets**

(19)

(11) Veröffentlichungsnummer: **0 148 358 B1**

## (12) EUROPÄISCHE PATENTSCHRIFT

(45) Veröffentlichungstag der Patentschrift: 03.04.91

(21) Anmeldenummer: 84113338.2

(22) Anmeldetag: 06.11.84

(51) Int. Cl.⁵: **B01D 53/36**, F01N 3/10, B01J 23/10, B01J 23/76

(54) Katalysator zur Verbrennung und Umwandlung von Gasen und höheren Kohlenwasserstoffen, sowie Vorrichtung zur Reduktion von Stickoxiden und Abgasnachverbrenner mit einem solchen Katalysator.

(30) Priorität: 10.11.83 DE 3340682
03.04.84 DE 3412289
21.04.84 DE 3415075

(43) Veröffentlichungstag der Anmeldung:
17.07.85 Patentblatt 85/29

(45) Bekanntmachung des Hinweises auf die Patenterteilung:
03.04.91 Patentblatt 91/14

(84) Benannte Vertragsstaaten:
AT BE CH FR GB IT LI LU NL SE

(56) Entgegenhaltungen:
DE-A- 2 210 365
FR-A- 2 200 049
US-A- 4 215 998

PATENT ABSTRACTS OF JAPAN, Band 5, Nr. 79 (C-56)[751], 23. Mai 1981; & JP - A - 56 26549 (NIPPON CONDENSER KOGYO K.K.) 14.03.1981

PATENT ABSTRACTS OF JAPAN, Band 5, Nr.

144 (C-71)[816], 11. September 1981; & JP - A - 56 76225 (SUMITOMO JUKIKAI KOGYO K.K.) 23.06.1981

(73) Patentinhaber: **KAT-TEC Gesellschaft für Katalysatortechnik mbH
Augsburger Strasse 712
W-7000 Stuttgart(DE)**

(72) Erfinder: **Koch, Christian, Dr.-Ing.
Würzburger Ring 33
W-8520 Erlangen(DE)**
Erfinder: **Erdlen, Erwin
Vorjurastrasse 139
W-8500 Nürnberg(DE)**

(74) Vertreter: **Patentanwälte Czowalla . Matschkur
+ Partner
Dr.-Kurt-Schumacher-Strasse 23 Postfach 9109
W-8500 Nürnberg 11(DE)**

EP 0 148 358 B1

## Beschreibung

Die Erfindung bezieht sich auf einen Katalysator zur Umwandlung von Gasen und höheren Kohlenwasserstoffen, welcher auf porösem oxidischen Trägermaterial einen aktiven Metallüberzug aufweist, der Lanthan und Kobalt als aktive Metallkomponenten enthält, wobei der Überzug durch Imprägnieren des Trägerkörpers mit einer Lösung aus thermisch leicht zersetzbaren Lanthan- und Kobalt-Salzen und anschließendes Brennen gebildet ist, sowie eine Vorrichtung zur Reduktion von Stickoxiden und einen Abgasnachverbrenner unter Verwendung eines derartigen Katalysators.

Die Verbrennungsvorgänge bei der Umsetzung von Kohlenwasserstoffen führen bislang stets nur zu einer unvollständigen Verbrennung und Umsetzung, wodurch sich Probleme mit Kohlenmonoxid, unverbrannten Kohlenwasserstoffen, Ruß und anderen Schadstoffen, wie beispielsweise Stickoxiden, ergeben. Zur Vermeidung dieser Schwierigkeiten ist bereits eine Verbrennung in den Bohrungen einer Keramik vorgeschlagen worden, die mit einem Katalysator beschichtet ist. Der Katalysator muß dabei auf einen porösen keramischen Träger aufgebracht werden, um eine hohe Lebensdauer zu erzielen und damit auf der anderen Seite durch entsprechend große Oberflächen eine vollständige Umsetzung des durchstreichenden Gemisches erreicht wird. Dies geschieht vorzugsweise in Lochsteinplatten oder einer Wabenkeramik, jedoch auch auf Körpern wie Kugeln, Zylindern und fadenförmigen Keramiken.

Als Katalysator zur Erfüllung dieser Aufgabe haben sich in der letzten Zeit vor allem platinhaltige Substanzen durchgesetzt, die jedoch den Nachteil besitzen, daß Platin von Verunreinigungen der zu verbrennenden Kohlenwasserstoffe, insbesondere beispielsweise Ruß und $SO_2$, im Falle der Nachverbrennung von Kraftfahrzeugabgasen sehr rasch "vergiftet" und damit unwirksam wird.

Ebenfalls Schwierigkeiten ergeben sich bei Verwendung eines aus der deutschen Patentschrift 22 10 365 bekannt gewordenen Katalysators, bei dem auf einem porösen keramischen Träger ein Gemisch aus Kobalt, Lanthan, Nickel und Uran als aktiver Metallüberzug aufgebracht ist, wobei diese letztendlich aber stets als Oxide vorliegen. Der Einfachheit halber soll aber nachfolgend stets nur von den (in den Oxiden enthaltenen) aktiven Metallkomponenten gesprochen werden. Bei umfangreichen, der vorliegenden Erfindung zugrundeliegenden Versuchen hat es sich nämlich herausgestellt, daß die darin vorgeschlagene Substanz sich ebenfalls nicht dauerhaft als Katalysator verwenden läßt, da der Nickel-Anteil, aber auch das Uran, den Katalysator durch Reaktion mit dem keramischen Träger und Zerfall dieses besonders durch Multispinellbildung auf die Dauer zerstören. Die angegebenen weiten Bereiche an Kobalt und Lanthan ergeben in weiten Teilen der Mischungsverhältnisse ebenfalls keinen brauchbaren Katalysator, da bei Unterschreiten des Verhältnisses ein Teil Lanthannitrat zu einem Teil Kobaltnitrat beim Tränken des Trägerkörpers sehr schnell durch austretendes überschüssiges Kobaltoxid während der Arbeitsweise des Katalysators eine Vergiftung eintritt. Diese "Vergiftung" des Katalysators sowohl im Falle der vorgenannten Kobalt-Lanthan-Nickel-Uran-Mischung, als auch im Falle platinhaltiger Substanzen, ergibt sich in besonderem Maße bei höheren Temperaturen, so daß derartige Katalysatoren beispielsweise bei der Nachverbrennung von Verbrennungsgasen oder Abgasen von Kraftfahrzeugen in kühleren Abschnitten weit hinter dem Brenngerät oder Motor angeordnet werden müssen. Dies hat aber wiederum den Nachteil, daß die Umsetzung nicht so vollständig erfolgen kann, wie es bei höheren Temperaturen der Fall wäre.

Der Erfindung liegt daher die Aufgabe zugrunde, einen Katalysator zur Umwandlung von Kohlenwasserstoffen zu schaffen, der stabil und weitgehend unempfindlich gegen eine Vergiftung sowohl durch Fremdschadstoffe, als auch gegen eine Eigenvergiftung bei höheren Temperaturen ist und der auch eine Reduktion, bzw. Umwandlung schädlicher Stickoxide ermöglicht.

Zur Lösung dieser Aufgabe ist bei einem Katalysator der eingangs genannten Art gemäß der Erfindung vorgesehen, daß der Metallüberzug 1 Teil Kobalt und 1-3 Teile, vorzugsweise 2 Teile Lanthan, sowie - bezogen auf die Summe dieser Stoffe - 2 bis 20 Masse % Cer enthält.

Diese besondere Zusammensetzung - unter Weglassung der bisherigen Katalysatorbestandteil Nickel und Uran - und die Einbeziehung des der Stabilisierung des Katalysators dienenden zusätzlichen Metalls Cer ergeben überraschenderweise einen Katalysator, der so temperaturbeständig ist, daß er je nach Gaszusammensetzung und Aufgabe in reduzierender Atmosphäre bis zu 1000° C und in oxidierender Atmosphäre sogar bis 1200° C eingesetzt werden kann. Dies ermöglicht beispielsweise seinen Einsatz als Nachverbrenner für Dieselmotoren, wobei der Katalysator wegen seiner hohen Temperaturbeständigkeit unmittelbar nach dem Motor im Bereich der höchsten Abgastemperatur eingesetzt werden kann, um die Reaktionsgeschwindigkeit der Rußumwandlung möglichst hoch zu gestalten. Das Abgas wird dabei vorzugsweise seitlich in eine zyklonförmige Ringkammer eingeführt, aus dieser in die senkrechte Achse umgelenkt, durch den Katalysator mit vielen hintereinander geschalteten Platten oder in einen stranggepreßten Wabenkörper (Monolith) geleitet und am anderen senkrechten Ende wieder durch eine zyklonförmige Ringkammer nach außen abgeleitet.

Bei diesem speziellen Einsatz des Katalysators zur Rußverbrennung hat es sich darüber hinaus als vorteilhaft erwiesen, wenn der Metallüberzug - bezogen auf den Gehalt an Kobalt und Lanthan - zusätzlich etwa 2 bis 20% Eisen enthält.

Während in den bislang bekannt gewordenen Katalysatoren der gesamte Trägerkörper aus dem jeweiligen porösen oxidischen Material bestand, soll erfindungsgemäß ein Zweikomponententräger verwendet werden, der aus einem temperaturwechselbeständigen Grundkörper, vorzugsweise Cordierit, besteht, der mit einer porösen Beschichtung aus einem Gemisch von Aluminiumoxid und Magnesiumoxid versehen ist. Durch diesen Zweikomponententräger, wobei der Grundkörper nicht porös ist, wird vermieden, daß ein Großteil der Katalysatorsubstanz in das Innere der porösen Trägerkeramik gelangt, in der eine nennenswerte Umsetzung überhaupt nicht mehr erfolgt. Man hat also die poröse Keramik mit ihrer katalytischen Oberflächenbeschichtung nur in Form einer dünnen Schicht auf dem Grundkörper, so daß tatsächlich eine sehr hohe Umsetzung der zu verbrennenden Bestandteile stattfinden kann, ohne den Anteil an Katalysatorsubstanz allzu hoch zu gestalten. Darüber hinaus hat der Zweikomponententräger den Vorteil , daß die Bildung von Ruß tief im Inneren eines porösen Körpers vermieden wird, die zu einer Sprengung des Trägers führen könnte.

Zur Herstellung eines erfindungsgemäßen Katalysators wird der Trägerkörper vorzugsweise mit wässrigen Lösungen von Kobalt-Lanthan-, Cer- und gegebenenfalls Eisen-Salzen, vorzugsweise deren Nitraten getränkt, der imprägnierte Trägerkörper bei ca. 100° C getrocknet und anschließend bei Temperaturen zwischen 200° C und 1000° in Luft oder reduzierender Atmosphäre gebracht. Aus dieser Herstellung erklärt sich, daß die aktiven Metallkomponenten selbstverständlich als Oxide, speziell als Lanthancobaltit $LaCoO_3$ vorliegen.

Um die Wirksamkeit eines derartigen Abgaskatalysators - insbesondere während der Kaltstartphase - noch weiter zu verbessern, ist in Weiterbildung der Erfindung vorgesehen, daß die Innenwand des Gehäuses zumindest teilweise mit einer Schale aus katalytisch beschichteter Keramik ausgekleidet ist.

Die zusätzliche Verwendung einer Auskleidungsschale aus katalytisch beschichteter Keramik - vorzugsweise der gleichen Keramik wie der im Gehäuse gehaltene, vom Abgas durchsetzte Wabenkörper und vorzugsweise auch mit dem gleichen katalytisch wirksamen Metalloxid überzogen - führt, insbesondere in Verbindung mit einer Aufrauhung der Oberfläche der Keramikschale derart: daß in Strömungsrichtung der Abgase hinterschnittene Taschen gebildet sind: zu einer Rußspeicherung, die besonders während der kritischen Kaltstartphase von besonderer Bedeutung ist. Es hat sich nämlich gezeigt, daß gerade während der Kaltstartphase Rußteilchen wegen der geringen Größen in Beziehung zu den Durchmessern der Kanäle des Wabenkörpers großenteils durch diese Kanäle ohne Wandberührung hindurchsausen, so daß die gewünschte katalytische Umsetzung dann nicht stattfindet. Diese Schwierigkeit wird in zweifacher Weise durch die erfindungsgemäße katalytisch beschichtete Keramikschale verbessert. Zum einen wird während der Kaltstart phase , in der die Umwandlungsbedingungen für die katalytische Umsetzung des Rußes noch ungünstiger sind, der Ruß in den zerklüfteten Taschen der Keramikschale gespeichert. Darüber hinaus findet zusätzlich ja auch an der katalytischen Oberflächenbeschichtung - Oberflächenbeschichtung bedeutet dabei eine Auskleidung aller feinen Poren des keramischen Trägermaterials, so daß auch bei mechanischem Abrieb seiner Oberfläche immer wieder katalytisch beschichtetes Material zur Verfügung steht - eine katalytische Umsetzung des Rußes statt.

Diese ist wegen der praktischen Unvermeidlichkeit von Wandkollisionen der Rußteilchen mit der katalytisch beschichteten Keramikschale dann besonders groß, wenn, wie in weiterer Ausgestaltung der Erfindung vorgesehen sein kann, der keramische Wabenkörper (oder eine Vielzahl hintereinandergeschalteter Lochplatten) eine mittige Trennwand des Gehäuses durchsetzt, dessen Abgaseinund -auslaßstutzen unter Bildung zyklonförmiger Ringkammern seitlich am Gehäuse sitzt. Durch diese Gasumlenkung in der zyklonförmigen Einlaßkammer und der ebenfalls zyklonförmigen Auslaßkammer des Gehäuses mit einer 90°-Umlenkung zwischen der Ein- und Ausströmrichtung gegenüber der Durchströmungsrichtung im Katalysator ergeben sich über die Zentrifugalkräfte notwendigerweise erhöhte Zwangskollisionen mit der Auskleidungs-Schale des Gehäuses wodurch sowohl die genannte Rußspeicherung während der Kaltstartphase verbessert wird, als auch die Möglichkeit einer katalytischen Umsetzung an der Beschichtung der Auskleidungsschale.

Dabei liegt es weiter im Rahmen der Erfindung, der Keramikschale und dem Gehäuse eine Schicht aus Mineralwolle, insbesondere Aluminiumoxidwolle, zwischenzuordnen und darüber hi naus auch - in an sich bekannter Weise - den katalytisch wirksamen Metallüberzug nicht unmittelbar auf das keramische Trägermaterial, sondern auf eine sog. "washcoat"-Trägerschicht aufzubringen. Derartige washcoat-Trägerschichten könen beispielsweise aus einer thermisch zersetzten porösen Aluminiumoxidschicht oder Metalloxid od. dgl. bestehen, die für eine bessere Haftung des aktiven Metallüberzugs sorgen, als die reine Trägerkeramik.

Zur Herstellung der hinterschnittenen Taschen zur verbesserten Rußspeicherung ist schließlich in weiterer Ausgestaltung der Erfindung vorgesehen, daß die Oberfläche der Keramikschale im lederharten Zustand mittels eines Kerbwerkzeugs mit Stegen versehen wird, die durch teilweises Zurückziehen und Drehen des Kerbwerkzeugs entgegen der Strömungsrichtung umgebogen werden.

Der Einsatz des erfindungsgemäßen Katalysators ist dabei nicht etwa auf die Nachverbrennung von Kraftfahrzeugabgasen und schon gar nicht auf die Rußnachverbrennung bei Dieselmotoren beschränkt. Der erfindungsgemäße Katalysator läßt sich für sämtliche Fälle von Kohlenwasserstoffumsetzungen erfolgreich einsetzen, sei es in Brennwertgeräten für Gebäudeheizungen, oder in Geräten zur Umwandlung von Kohlenwasserstoffen in Spaltgas od. dgl. Gerade die hohe Temperaturbeständigkeit des Katalysators und seine geringe Anfälligkeit gegen Selbstvergiftung oder Vergiftung durch Verunreinigungen des Brennmaterials machen ihn zu einem universell einsetzbaren Katalysator. Die hohe Temperaturbeständigkeit ist dabei von ganz besonderer Bedeutung, da sie ein Arbeiten bei hohen Temperaturen ermöglicht, bei denen die Umsetzungen entsprechend schneller erfolgen, so daß auch mit Sicherheit eine vollständige Umsetzung der jeweiligen Brennstoffe gewährleistet ist.

Inhomogene Flammen oberhalb von 900° C sowie homogene Umsetzungen in Keramiken oberhalb 1300° C erzeugen bekanntlich Stickoxide. Im primären Rauchgasstrom von Verbrennungsanlagen liegen diese zu 95% als NO und zu 5% als $NO_2$ vor. Im Laufe der Rauchgasbehandlung steigt dann der $NO_2$-Gehalt durch Nachoxidation weiter an.

Zur Entgiftung der Abgase, d.h. zur Reduktion der Stickoxide zu Stickstoff ist es bereits vorgeschlagen worden, das zu reinigende Gas mit Ammoniak als Reduktionsmittel zu versetzen und in Anwesenheit eines Katalysators die Umsetzung stattfinden zu lassen. Als Katalysator werden dabei bisher meist Ni, Cr, Cu und V- sowie platinmetallhaltige Metallüberzüge auf den keramischen Träger verwendet.

Aus japanischen Unterlagen geht hervor, daß die Umsetzung zwischen 300 und 400° C mit Ammoniak in ca. 100 kg Katalysator/MW geschieht. Dabei werden im stöchiometrischen Falle mehr als 70 Mole $NH_3$ verbraucht, also mehr als 1 ,2 kg/h/MW. Die Verwendung von Ammoniak ergibt sich aus der Selektivität dieses Stoffes in Zusammenhang mit dem Katalysator bei der Umsetzung der Stickoxide.

Die bislang bekannten Katalysatoren haben dabei den Nachteil, daß sie zum einen inaktiv sind, was - wie vorstehend ausgeführt - die Verwendung von Ammoniak als Reduktionsmittel erforderlich macht oder daß sie wie im Falle der platinmetallhaltigen Katalysatoren im Betrieb zu leicht selbst "vergiftet" werden, d.h. durch Anlagerung von Schadstoffen ihre katalytische Wirksamkeit verlieren.

Es hat sich nunmehr gezeigt, daß der vorstehend beschriebene für die Umwandlung von Kohlenwasserstoffen bevorzugt einsetzbare Katalysator nicht nur außerordentlich günstig auf die Verhinderung des Auftretens von Stickoxiden ist, sondern basierend auf dieser besonderen Wirksamkeit auch außerordentlich vorteilhaft als Katalysator zur katalytischen Reduktion von Stickoxiden, insbesondere im Zuge der Umwandlung von fossilen Brennstoffen, bei denen das zu reinigende Gas unter Zufügung eines Reduktionsmittels einen Katalysator durchströmt, in welchem ein poröses oxidisches Trägermaterial mit einem katalytisch aktiven Metall- bzw. Metalloxidüberzug angeordnet ist, eingesetzt werden kann.

Diese besondere Wirksamkeit des gemäß der vorliegenden Erfindung vorgeschlagenen Katalysators für $DeNO_x$-Systeme ermöglicht anstelle oder neben Ammoniak als Reduktionsmittel auch die Verwendung von Wasserstoff- oder Kohlenstoffverbindungen, insbesondere Kohlenmonoxid. Dies wiederum gestattet den Aufbau von $DeNO_x$-Systemen, d.h. von Reinigungsanlagen zur Entgiftung von Abgasen von den darin enthaltenen Stickoxiden bei denen als Reduktionsmittel Erdgas oder aber Spaltgas verwendet wird. Das Spaltgas selbst kann dabei wiederum bevorzugt durch katalytische Teilumwandlung entweder von Erdgas oder Öl erzeugt werden, wobei für diese katalytische Teilumwandlung wiederum bevorzugt der gleiche, vorstehend beschriebene Katalysator für die Vergasungsreaktion verwendet werden kann. Bei der unmittelbaren Verwendung von Erdgas wird hierbei in erster Linie der darin enthaltene Wasserstoff zur $NO_x$-Reduzierung aktiviert. Bei Ausnutzung des im Erdgas enthaltenen Kohlenstoffsals Reduktionsmittel kann die Menge des zur Entgiftung notwendigen Reduktionsmittels, d.h. die Menge des Erdgases, weiter gesenkt werden. Diese Aufschließung des Kohlenstoffanteils geschieht mit Hilfe eines Spaltgaserzeugers, in welchem das Erdgas, oder aber auch Öl katalytisch teilumgesetzt wird. Neben der Verringerung der Betriebsmittelkosten ergibt sich durch den Einsatz von Ammoniak durch Erdgas oder Spaltgas auch eine Vereinfachung der Anlage, da ein Ammoniak-Tank nicht mehr notwendig ist. Die Sicherheits- und Transportprobleme von Ammoniak entfallen in diesem Fall.

Weitere Vorteile, Merkmale und Einzelheiten der Erfindung ergeben sich aus der nachfolgenden Beschreibung einiger Ausführungsbeispiele, sowie anhand der Zeichnung. Dabei zeigen:

Fig. 1    einen Längsschnitt durch einen schematisch aufgebauten Abgaskatalysator zur Rußnachverbrennung für Dieselmotoren,

Fig. 2    einen Querschnitt durch den Abgaskatalysator nach Fig. 1

Fig. 3    einen Längsschnitt durch eine abgewandelte verbesserte Ausführungsform eines Abgaskatalysators für Dieselmptoren,

Fig. 4    eine teilweise aufgebrochene Stirnansicht des Abgaskatalysators nach Fig. 3

Fig. 5    einen vergrößerten Teilschnitt durch die Oberfläche der mit Rußfangtaschen versehenen Keramikschale des Abgaskatalysators nach den Fig. 3 und 4 und

Fig. 6    eine schematisch Darstellung des Aufbaus einer DeNO$_x$-Anlage zur Stickoxid-Reduktion mit Hilfe des erfindungsgemäßen Katalysators.

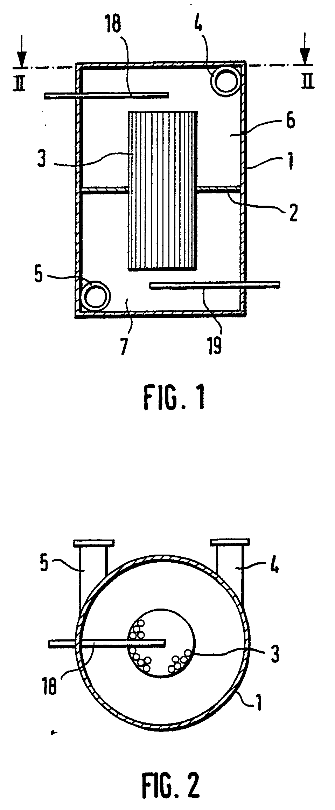

Die Fig. 1 und 2 zeigen schematisch einen Längs-, bzw. Querschnitt durch einen erfindungsgemäßen Abgasnachverbrenner für Dieselmotoren. In dem im wesentlichen zylindrischen Gehäuse 1 ist der eigentliche, eine Trennwand 2 durchsetzende Trägerkörper 3 angeordnet, der aus hintereinandergeschalteten Platten oder in Form eines stranggepreßten Wabenkörpers (Monolith) ausgebildet ist, wobei die Oberflächen der durchgehenden Kanäle mit der weiter oben beschriebenen Katalysatorsubstanz beschichtet ist. Der obere seitliche Einlaß 4, der an die Auspuffleitung vom Motor angeschlossen ist, mündet tangential in die obere Ringkammer 6 ein, während in gleicher Weise die Auslaßleitung 5 tangential aus der unteren Ringkammer 7 herausgeführt ist. Es hat sich gezeigt, daß durch die zyklonartige Abgasführung eine bessere Absetzung und Verbrennung der Rußbestandteile stattfindet. Die Anordnung der Einlaß-und Auslaßleitungen 4 und 5 könnte dabei auch vertauscht sein, so daß beispielsweise die Einlaßleitung unten ist.

Bei 18 und 19 sind schematisch Thermoelemente angedeutet, die zur Überwachung der Einlaß- und Auslaßtemperatur dienen. Am Armaturenbrett des Kraftfahrzeugs ist dabei zweckmäßigerweise ein drei Anzeigefelder umfassendes Temperaturanzeigeinstrument vorgesehen, wobei die Lage des Zeigers oder des sonstigen Anzeigeorgans im ersten Feld angibt, daß die Auslaßtemperatur kleiner als die Einlaßtemperatur ist. Dies bedeutet den Anfahrfall, in welchem der Katalysator noch nicht warm genug ist, um die Umsetzung und Nachverbrennung insbesondere der Rußbestandteile zu bewirken, die zu einer Erhöhung der Temperatur in der Auslaßkammer 7 gegenüber der Abgastemperatur in der Einlaßkammer 6 führen. Bei ordnungsgemäßer Funktion des Abgasnachverbrenners muß die Auslaßtemperatur in der Kammer 7 größer sein als die Einlaßtemperatur, was einer Zeigerstellung im zweiten (mittleren) Anzeigefeld entspricht. Das dritte Feld wiederum signalisiert den Fall, daß die Auslaßtemperatur sehr viel größer als die Einlaßtemperatur ist. Dies wiederum signalisiert, daß am Motor irgend etwas kaputt ist, daß beispielsweise ein Zylinder ausgefallen ist, so daß nicht nur geringe nachzuverbrennende Bestandteile im Abgas vorhanden sind, sondern ein Teil des Treibstoffes selbst, so daß eine übermäßige Erhitzung im Abgasnachverbrenner stattfindet.

Die Stellung des Zeigers in diesem dritten Feld signalisiert also einen Motorschaden, der nicht nur im Interesse des Motors selbst, sondern auch zum Schutz des Nachverbrenners behoben werden muß.

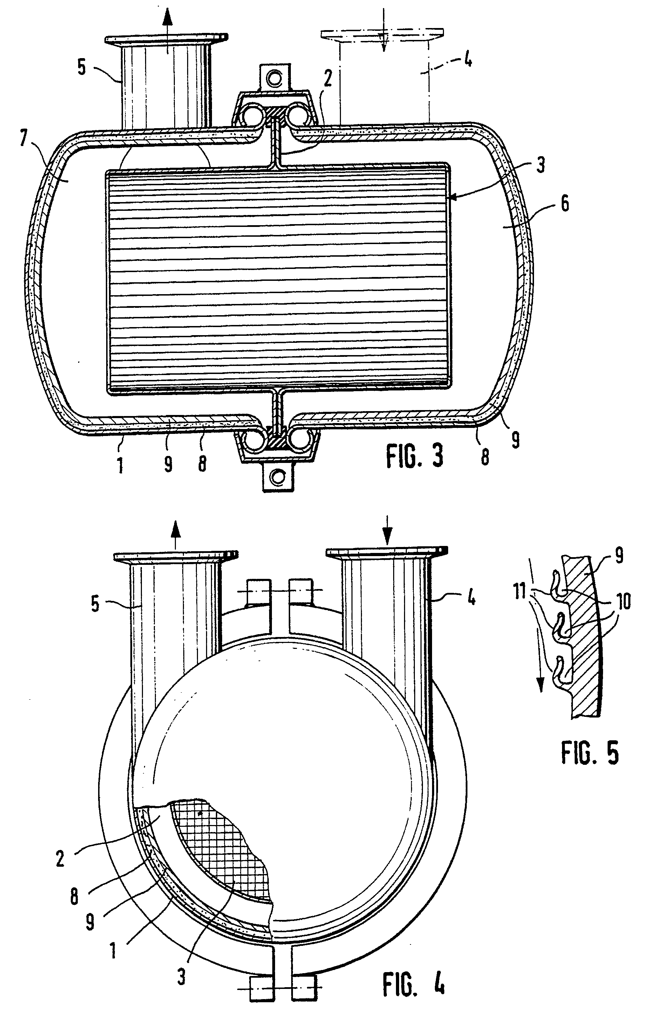

Der abgewandelte, verbesserte Abgaskatalysator mit Rußnachverbrennung nach den Figuren 3 bis 5, umfaßt ein äußeres, im wesentlichen als zylindrischer Topf ausgebildetes Metallgehäuse 1 und einen in dessen Längsachse angeordneten, eine mittige Trennwand 2 durchsetzenden Katalysator 3 in Form eines keramischen Wabenkörpers mit einer katalytisch wirksamen Metalloxidbeschichtung. Der Gaseinlaßstutzen 4, der mit dem Auslaß des Motors verbunden wird und der zum Schalldämpfer und zum Auspuffrohr führende Gasauslaßstutzen 5 sitzen jeweils seitlich am Gehäuse, so daß zyklonförmige Einlaß- und Auslaßkammern 6, 7 gebildet werden, in denen die Ein- und Auslaßrichtung des Gases jeweils um 90° in die Längsrichtung des Wabenkörpers 3 umgelenkt wird, und in deren Einlauf vorzugsweise eine Gasbeschleunigungseinrichtung, beispielsweise in Form einer Venturidüse sitzt die die Strömung in der Ringkammer beschleunigt. Die Innenwand des Gehäuses ist unter Zwischenordnung einer Aluminiumoxidwolle-Zwischenschicht 8 mit einer Keramikschale 9 ausgekleidet, die aus dem gleichen keramischen Material wie der Wabenkörper 3 besteht und die mit der gleichen katalytisch wirksamen Beschichtung, bzw. Durchtränkung, versehen ist. Die Oberfläche der Keramikschale ist dabei, wie der vergrößerte Ausschnitt der Figur 5 zeigt, mit Taschen 10 bildenden, entgegen der Strömungsrichtung des Abgases in den Zyklonkammern 6, 7 umgebogenen Stegen 11 versehen. In diesen Taschen 10 fängt sich, besonders während der Kaltstartphase, der Ruß, der dann nach dem Erhitzen des Keramikkörpers auf die Betriebstemperatur katalytisch umgesetzt wird. Zum leichteren Einbringen des keramischen Wabenkörpers, d.h. des eigentlichen Katalysators und zur Ermöglichung einer einfachen Auskleidung des Gehäuses mit der Keramikschale, ist das Gehäuse 1 längsgeteilt, besteht also aus zwei miteinander verschraubten, oder ggf. auch verschweißten, Halbschalen.

Die Erfindung ist nicht auf das dargestellte Ausführungsbeispiel beschränkt. Entscheidend für die erfindungsgemäße Verbesserung der Wirksamkeit von Abgaskatalysatoren, insbesondere für Dieselmotoren, ist lediglich die Tatsache, daß in der Ein- und Auslaßkammer eine Umlenkung des Gasstroms von der Ein- bzw. Ausströmrichtung in die Durchströmrichtung des Katalysators stattfindet und daß die Innenwand mit einer rußspeichernden und katalytisch wirksamen Keramikschale, zumindest teilweise ausgekleidet ist.

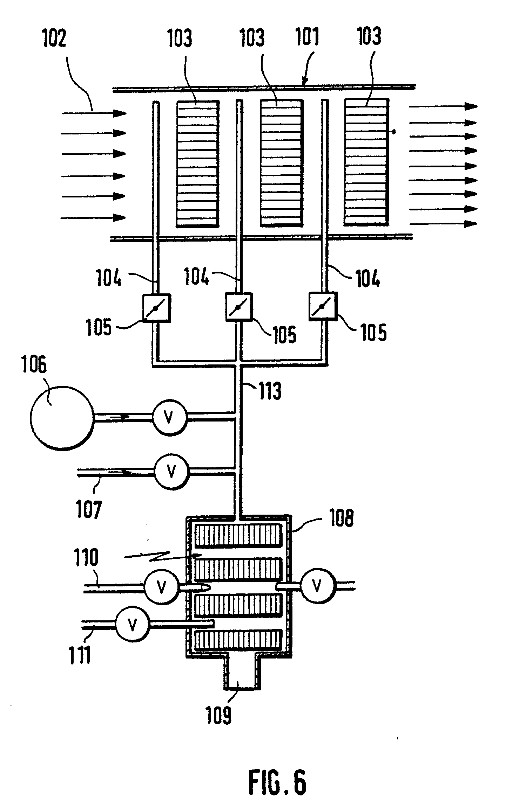

Bei 101 ist in Fig 6 ein Reaktor einer DeNO$_x$-Anlage zur Stickoxidreduktion angedeutet, der vom Rauchgasstrom 102 durchströmt wird, wobei im Reaktor ein oder mehrere keramische Trägerkörper 103 angeordnet sind, die bevorzugt nach Art von Wabenkörpern ausgebildet sind und deren Oberfläche mit dem in den Ansprüchen beschriebenen speziellen Katalysator beschichtet sind. Anstelle des Rauchgases, welches mit NO$_x$, d.h. mit Stickoxiden unterschiedlicher Oxidationsstufe verunreinigt ist, könnte selbstverständlich auch irgendein anderes Gas mit Hilfe eines solchen Reaktors 101 gereinigt werden, welches Stickoxidverunreinigungen enthält. Jeweils vor den Katalysatoren 103 wird das mit Stickoxiden verunreinigte Rauchgas mit einem Reduktionsmittel versehen, welches über getrennte Reduktionsmitteleinlässe 104 mit Dosierungsklappen 105 zugeführt werden kann. Diese Reduktionsmitteleinlässe 104 sind mit einer gemeinsamen Versorgungsleitung 113 verbunden, die wahlweise entweder an einem Ammoniak-Tank 106, an eine Erdgaszufuhrleitung 107 oder aber auch an einen Spaltgaserzeuger 108 anschließbar ist, in welchem Öl oder Erdgas katalytisch teilumgesetzt wird, so daß ein erhöhter Anteil an CO gebildet wird, das als Reduktionsmittel für die DeNO$_x$-Reaktion im Reaktor 101 dient. Der Spaltgaserzeuger umfaßt neben dem Lufteinlaß 109, der Ölzufuhrleitung 110 und einer Gaszuführleitung 111 sowie eine Vielzahl von nur schematisch als Kästen angedeuteten Katalysatorkörpern, die ähnlich aufgebaut sein können wie die Katalysatoren 103 des DeNO$_x$-Konverters. Die katalytische Umsetzung von Öl oder Erdgas zu Spaltgas kann dabei sogar unter Verwendung des gleichen aktiven Katalysatormaterials, d.h. des speziellen Lanthan-Kobalt-Metalloxidüberzugs erfolgen, wie er für die DeNO$_x$-Reaktion vorgeschlagen wird.

In weiterer Ausgestaltung der Erfindung soll als Trägermaterial für den aktiven Metallüberzug ein besonders hartes Material, wie z.B. das bereits erwähnte Cordierit eingesetzt werden, wobei dies aber besonders porös ausgebildet sein soll, um ein vollständiges Durchtränken des Materials mit der Lösung aus den Lanthan- und Kobalt-Salzen, oder allgemein ausgedrückt den die aktiven Metallüberzugsschicht bildenden Salzen, sicherzustellen. Dabei wird die katalytische Substanz in zwei Stufen gebildet. In der ersten Stufe wird ein Al-haltiges oder ein Al- und Mg-haltiges Salz durch Tränken in das feinporöse Material eingebracht und anschließend thermisch oder chemisch zersetzt. Dabei bildet sich ein Katalysatorträgerbelag aus $\gamma$- oder $\alpha$-Al$_2$O$_3$ oder einem Spinell aus MgO und Al$_2$O$_3$ -(washcoat), auf das dann in einer zweiten Stufe der Katalysator aufgetränkt wird. Dies ist nämlich bei dem Einsatz eines solchen Katalysators für die Entgiftung der Rauchgase von Verbrennungsanlagen z.B. Kraftwerken, besonders wichtig, da diese Abgase Feststoffverunreinigungen enthalten, die erodierend wirken und den Katalysatorkörper abschleifen. Es ist also nicht ausreichend, wenn lediglich die axialen Gasdurchtrittsbohrungen eines Keramikkörpers oberflächlich mit dem katalytischen Überzug versehen sind, sondern der katalytische Überzug muß in die feinen Mikroporen des Materials durchgehend eingelagert sein, so daß mit dem Abtragen des Trägermaterials immer wieder neues, katalytisch wirksames Material an die Oberfläche gelangt.

## Ansprüche

1. Katalysator zur Umwandlung von Gasen und höheren Kohlenwasserstoffen, welcher auf porösem oxidischen Trägermaterial einen aktiven Metallüberzug aufweist, der Lanthan und Kobalt als aktive Metallkomponenten enthält, wobei der Überzug durch Imprägnieren des Trägerkörpers mit einer Lösung aus thermisch leicht zersetzbaren Lanthan- und Kobalt-Salzen und anschließendes Brennen gebildet ist, dadurch gekennzeichnet, daß der Metallüberzug 1 Teil Kobalt und 1-3 Teile, vorzugsweise 2 Teile, Lanthan, sowie - bezogen auf die Summe dieser Stoffe - 2 bis 20 Masse % Cer enthält.

2. Katalysator nach Anspruch 1, insbesondere zur Rußverbrennung, dadurch gekennzeichnet, daß der Metallüberzug - bezogen auf den Gehalt an Kobalt und Lanthan - 2 - 20 Masse % Eisen enthält.

3. Katalysator nach Anspruch 1 oder 2, gekennzeichnet durch einen temperaturwechselbeständigen Grundkörper, vorzugsweise Cordierit, der mit einer porösen Beschichtung aus einem Gemisch von Aluminiumoxid und Magnesiumoxid versehen ist.

4. Verfahren zur Herstellung eines Katalysators nach einem der Ansprüche 1 bis 3, dadurch gekennzeichnet, daß der Trägerkörper mit einer vorzugsweise wässrigen Lösung von Kobalt- Lanthan- und Cer-, ggf. zusätzlich von Eisen-Salzen, vorzugsweise deren Nitraten getränkt wird, daß der imprägnierte Trägerkörper bei ca. 100° C getrocknet und anschließend bei Temperaturen zwischen 200° und 1000° C in der Luft oder reduzierender Atmosphäre gebrannt wird.

5. Abgaskatalysator mit Rußnachverbrennung für Dieselmotoren mit einem von einem Gehäuse (1) umgebenen Katalysator nach einem der Ansprüche 1 bis 4, dadurch gekennzeichnet, daß dem axial durchströmten Katalysator in Form eines Wabenkörpers oder einer Vielzahl hintereinandergeschalteter Platten je eine vom Gehäuse (1) begrenzte, zyklonförmige Ringkammer (6,7) mit seitlichen Ein- bzw. Ausströmöffnungen (4,5) vor- bzw. nachgeschaltet ist, in denen jeweils eine 90°-Umlenkung des Gasstromes erfolgt.

6. Abgaskatalysator nach Anspruch 5, dadurch gekennzeichnet, daß die dem Katalysator vorgeschaltete Zylonkammer (6) unmittelbar hinter den Motorauslaß öffnungen angeordnet ist.

7. Abgaskatalysator nach Anspruch 5 oder 6, gekennzeichnet durch Thermofühler (18,19) mit zugeordneten Anzeigevorrichtungen zur Überwachung der Einlaß- und Auslaßtemperatur des Abgases im Nachverbrenner.

8. Abgaskatalysator nach einem der Ansprüche 5 bis 7, dadurch gekennzeichnet, daß die Innenwand des Gehäuses (1) zumindest teilweise mit einer Schale (9) aus katalytisch beschichteter Keramik ausgekleidet ist.

9. Abgaskatalysator nach Anspruch 8, dadurch gekennzeichnet, daß die Keramikschale (9) eine aufgerauhte, in Strömungsrichtung der Abgase hinterschnittene Taschen (10) bildende Oberfläche aufweist.

10. Abgaskatalysator nach Anspruch 8 oder 9, dadurch gekennzeichnet, daß der Keramikschale (9) und dem Ge häuse (1) eine Schicht (8) aus Mineralwolle, insbesondere Aluminiumoxidwolle, zwischengeordnet ist.

11. Abgaskatalysator nach einem der Ansprüche 8 bis 10, dadurch gekennzeichnet, daß dem katalytisch wirksamen Metallüberzug und der Keramikschale eine sog. "washcoat"-Trägerschicht zwischengeordnet ist.

12. Abgaskatalysator nach einem der Ansprüche 8 bis 11, dadurch gekennzeichnet, daß der keramische Wabenkörper (3) eine mittige Trennwand (2) des Gehäuses durchsetzt, dessen Abgasein- und -auslaßstutzen (4,5) unter Bildung zyklonförmiger Ringkammern (6,7) seitlich am Gehäuse (1) sitzen.

13. Abgaskatalysator nach einem der Ansprüche 8 bis 12, dadurch gekennzeichnet, daß im Einlauf des Gehäuses eine Gasbeschleunigungseinrichtung, beispielsweise in Form einer Venturidüse angeordnet ist, die die Strömung in der Ringkammer beschleunigt.

14. Verfahren zur Herstellung eines Abgaskatalysators nach einem der Ansprüche 8 bis 13, dadurch gekennzeichnet, daß die Oberfläche der Keramikschale (9) an der Innenwand des Katalysatorgehäuses (1) im lederharten Zustand mittels eines Kerbwerkzeugs mit Stegen versehen wird, die, vorzugsweise durch teilweises Zurückziehen und Drehen des Kerbwerkzeugs, entgegen der Strömungsrichtung umgebogen werden.

15. Verwendung des Katalysators nach den Ansprüchen 1 bis 4 in einer Vorrichtung zur katalytischen Reduktion von Stickoxiden, insbesondere im Zuge der Umwandlung von fossilen Baustoffen, bei der das zu reinigende Gas unter Zufügung eines Reduktionsmittels einen Reaktor durchströmt, in welchen ein poröses oxidisches Trägermaterial mit einem katalytisch aktiven Metall- bzw. Metalloxidüberzug angeordnet ist.

16. Verwendung nach Anspruch 15, dadurch gekennzeichnet, daß auf den Trägerkörper vor dem Imprägnieren mit der Lösung der aktiven Metallsalze (durch Tränken mit Salzen von Aluminium- und/oder Magnesium-Oxiden) eine sogenannte "Washcoat"- oder "Engobe"-Schicht als Haftunterlage für die eigentliche Katalysatorschicht aufgebracht worden ist.

17. Verwendung nach Anspruch 15 oder 16, dadurch gekennzeichnet, daß der poröse Trägerkörper mit dem aktiven Metallüberzug durchgehend imprägniert ist.

18. Verwendung nach einem der Ansprüche 15 bis 17, dadurch gekennzeichnet, daß das Reduktionsmittel Ammoniak enthält.

19. Verwendung nach einem der Ansprüche 15 bis 18, dadurch gekennzeichnet, daß das Reduktionsmittel Wasserstoff enthält.

20. Verwendung nach einem der Ansprüche 15 bis 19, dadurch gekennzeichnet, daß das Reduktionsmittel Kohlenstoffverbindungen, insbesondere CO enthält.

21. Verwendung nach einem der Ansprüche 15 bis 20, dadurch gekennzeichnet, daß das Reduktionsmittel Erdgas enthält.

22. Verwendung nach einem der Ansprüche 15 bis 21, dadurch gekennzeichnet, daß das Reduktionsmittel Spaltgas enthält.

23. Verwendung des Katalysators nach einem der Ansprüche 1-4 als DeNOx-Katalysator zur Evzevgung von Spaltgas durch Katalytische Umsetzung von Öl- oder Erdgas.

## Claims

1. Catalyst for conversion of gases and higher hydrocarbons, which has an active metal coating on porous oxidic carrier material, the coating containing lanthanum and cobalt as active metal components, the coating being formed by the impregnation of the carrier material with a solution of thermally easily decomposable lanthanum and cobalt salts and subsequent burning, characterised by the fact that the metal coating contains 1 part of cobalt and 1-3 parts, preferably 2 parts, of lanthanum, and also 2 to 20% by mass of cerium, based on the sum of the aforementioned substances.

2. Catalyst in accordance with Claim 1, particularly for the burning of soot, characterised by the fact that the metal coating contains 2-2 by mass of iron, based on the cobalt and lanthanum content.

3. Catalyst in accordance with Claim 1 or 2, characterised by a fundamental substance resistant to temperature change, preferably cordierite, which is provided with a porous coating consisting of a mixture of aluminium oxide and magnesium oxide.

4. Process for the production of a catalyst in accordance with one of Claims 1 to 3, characterised by the fact that the carrier body is saturated with a preferably aqueous solution of cobalt, lanthanum and cerium salts, possibly with the addition of iron salts, preferably their nitrates, that the impregnated carrier body is dried at about 100° C and subsequently burnt at temperatures between 200° and 1000° C in the air or reducing atmosphere.

5. Waste gas catalyst with after-burning of soot, for diesel engines, with a catalyst surrounded by a housing (1), in accordance with one of Claims 1-4, characterised by the fact that the catalyst subjected to axial flow and in the form of a honeycomb structure or a plurality of plates connected in succession to one another is in each case preceded or followed by a cyclone-shaped toroidal chamber (6,7) delimited by the housing (1) and having lateral inlet and outlet apertures (4,5) in each of which a 90° deflection of the gas flow occurs.

6. Waste gas catalyst in accordance with Claim 5, chacterised by the fact that the cyclone chamber (6) preceding the catalyst is provided immediately behind the motor outlet.

7. Waste gas catalyst in accordance with Claim 5 or 6, characterised by thermo-probes (18,19) with associated indicator devices for monitoring the inlet and outlet temperature of the waste gas in the after-burner.

8. Waste gas catalyst in accordance with one of Claims 5-7, characterised by the fact that the internal wall of the housing (1) is at least partly lined with a shell (9) of catalytically coated ceramic.

9. Waste gas catalyst in accordance with Claim 8, characterised by the fact that the ceramic dish (9) has a roughened surface forming pockets (10) undercut in the direction of flow of the waste gases.

10. Waste gas catalyst in accordance with Claim 8 or 9, characterised by the fact that the ceramic dish (9) and the housing (1) contain between them a layer (8) of mineral wool, particularly aluminium oxide wool.

11. Waste gas catalyst in accordance with one of Claims 8 to 10, characterised by the fact that a so-called washcoat carrier layer is interposed between the catalytically effective metal coating and the ceramic dish.

12. Waste gas catalyst in accordance with one of Claims 8 to 11, characterised by the fact that the ceramic honeycomb body (3) passes through a central partition wall (2) of the housing of which the waste gas inlet and outlet sockets (4,5) rest on the side of the housing (1), forming cyclone-shaped toroidal chambers (6,7).

13. Waste gas catalyst in accordance with one of Claims 8 to 12, characterised by the fact that the inlet of the housing contains a gas acceleration device, e.g. in the form of a Venturi nozzle, which accelerates the flow in the toroidal chamber.

14. Process for the production of a waste gas catalyst in accordance with one of Claims 8 to 13, characterised by the fact that the surface of the ceramic dish (9), on the internal surface of the catalyst housing (1), in a leather-hard state, by means of a notching tool, is provided with crosspieces which, preferably by drawing back and turning the notching tool, are bent over in the opposite direction to that of the flow.

15. Use of the catalyst according to Claims 1-4 in a device for the catalytic reduction of nitrogen oxides, particularly in the course of the conversion of fossil building materials, in which the gas to be purified flows, with the addition of a reducing agent, through a reactor in which is provided a porous oxidic carrier material with a catalytically active metal coating or metal oxide coating.

16. Use in accordance with Claim 15, characterised by the fact that, prior to impregnation with the solution of the active metal salts (by saturation with salts of aluminium oxides and/or magnesium oxides), a so-called "wash coat" or "engobe" coating, as an adhesive base for the actual catalyst coating, has been applied to the carrier body.

17. Use in accordance with Claim 15 or 16, characterised by the fact that the porous carrier body is completely impregnated with the active metal coating.

18. Use in accordance with one of Claims 15-17, characterised by the fact that the reducing agent contains ammonia.

19. Use in accordance with one of Claims 15-18, characterised by the fact that the reducing agent contains hydrogen.

20. Use in accordance with one of Claims 15-19, characterised by the fact that the reducing agent contains carbon compounds, particularly CO.

21. Use in accordance with one of Claims 15-20, characterised by the fact that the reducing agent contains natural gas.

22. Use in accordance with one of Claims 15-21, characterised by the fact that the reducing agent contains cracked gas.

23. Use of the catalyst according to one of Claims 1-4 as DeNO$_x$- catalyst for the production of cracked gas by the catalytic conversion of oil gas or natural gas.

**Revendications**

1. Catalyseur destiné à la transformation de gaz et d'hydrocarbures supérieurs, qui comporte, sur un substrat poreux d'oxydation, un revêtement métallique actif, qui renferme du lanthane et du cobalt comme composants métalliques actifs, le revêtement étant obtenu par une imprégnation du substrat par une solution de sels de lanthane et de cobalt facilement décomposables par voie thermique, suivie d'une cuisson, caractérisé en ce que le revêtement métallique renferme 1 part de cobalt et 1-3 parts, de préférence 2 parts, de lanthane, ainsi que, rapporté à la somme de ces matériaux, 2 à 20% en masse de Ce (cérium).

2. Catalyseur selon la revendication 1, notamment pour brûler des suies, caractérisé en ce que le revêtement métallique renferme, rapporté à la teneur en cobalt et en lanthane, 2-20% en masse de fer.

3. Catalyseur selon la revendication 1 ou 2, caractérisé par un corps de base résistant aux variations de température, de préférence de la cordiérite, qui est pourvue d'un revêtement poreux en un mélange d'oxyde d'aluminium et d'oxyde de magnésium.

4. Procédé de fabrication d'un catalyseur selon l'une des revendications 1 à 3, caractérisé en ce que le corps formant substrat est imprégné avec une solution de préférence aqueuse de sels de cobalt, lanthane et de césium, et en plus, le cas échéant, de sels de fer, de préférence leurs nitrates, et en ce que le corps formant substrat imprégné est séché à environ 100°C, et subit ensuite une cuisson à des températures comprises entre 200°C et 1000°C, dans l'air ou dans une atmosphère réductrice.

5. Pot catalytique avec post-combustion des suies pour moteurs Diesel, comportant, entouré par un carter (1), un catalyseur selon l'une des revendications 1 à 4, caractérisé en ce qu'en amont et en aval du catalyseur dans lequel l'écoulement se fait en direction axiale et qui se présente sous la forme d'un corps à structure en nid d'abeille ou d'une succession d'une série de plaques, est agencée une chambre annulaire (6,7) en forme de cyclone, chacune délimitée par le carter (1), et comportant des ouvertures latérales d'entrée et de sortie (4,5), le flux de gaz subissant une déviation de 90° dans chacune de ces chambres.

6. Pot catalytique selon la revendication 5, caractérisé en ce que la chambre de cyclone (6) disposée en amont du catalyseur, est agencée directement après les ouvertures d'échappement du moteur.

7. Pot catalytique selon la revendication 5 ou 6, caractérisé par des sondes thermiques (18,19) avec des dispositifs d'affichage associés, pour le contrôle de la température d'entrée et de sortie des gaz d'échappement dans le brûleur de post-combustion.

8. Pot catalytique selon l'une des revendications 5 à 7, caractérisé en ce que la paroi intérieure du carter (1) est revêtue au moins partiellement, d'une coque (9) en céramique avec un revêtement catalytique.

9. Pot catalytique selon la revendication 8, caractérisé en ce que la coque en céramique (9) présente une surface rendue rugueuse par des poches (10) en contre-dépouille dans la direction de l'écoulement des gaz d'échappement.

10. Pot catalytique selon la revendication 8 ou 9, caractérisé en ce qu'une couche (8) de laine minérale, notamment de laine d'oxyde d'aluminium, est disposée entre la coque en céramique (9) et le carter (1).

11. Pot catalytique selon l'une des revendications 8 à 10, caractérisé en ce qu'une couche support dénommée "washcoat" est disposée entre le revêtement métallique à action catalytique et la coque en céramique.

12. Pot catalytique selon l'une des revendications 8 à 11, caractérisé en ce que le corps en céramique à structure en nid d'abeille (3) traverse une cloison de séparation centrale (2) du carter dont les raccords d'entrée et de sortie des gaz d'échappement (4, 5) sont disposés latéralement sur le carter (1) en créant ainsi des chambres annulaires (6,7) en forme de cyclone.

13. Pot catalytique selon l'une des revendications 8 à 12, caractérisé en ce que dans l'entrée du carter, est agencé un dispositif permettant d'accélérer le gaz, par exemple sous la forme d'un tube de Venturi, qui accélère l'écoulement dans la chambre annulaire.

14. Procédé de fabrication d'un pot catalytique selon l'une des revendications 8 à 13, caractérisé en ce que l'on munit la surface de la coque en céramique (9) sur la paroi intérieure du carter de pot catalytique (1), à l'état de dureté du cuir et au moyen d'un outil d'entaillage, de nervures qui sont repliées à l'encontre du sens de l'écoulement, de préférence par un retrait partiel et une rotation de l'outil d'entaillage.

15. Application du catalyseur selon les revendications 1 à 4 dans un dispositif pour la réduction catalytique d'oxydes d'azote, notamment dans le cadre de la transformation de matériaux fossiles, dans lequel le gaz à dépolluer circule, avec addition d'un agent réducteur, au travers d'un réacteur dans lequel est disposé un substrat poreux d'oxydation avec un revêtement catalytique actif de métal ou d'oxyde métallique.

16. Application selon la revendication 15, caractérisée en ce que l'on a appliqué sur le corps formant substrat, avant l'imprégnation par la solution des sels métalliques actifs (par imprégnation par des sels d'oxydes d'aluminium et/ou de magnésium), une couche dénommée "Washcoat" ou "Engobe" en guise de couche d'accrochage pour la couche de catalyseur proprement dite.

17. Application selon la revendication 15 ou 16, caractérisée en ce que le corps formant substrat poreux est imprégné de part en part avec le revêtement métallique actif.

18. Application selon l'une des revendications 15 à 17, caractérisée en ce que l'agent réducteur contient de l'ammoniac.

19. Application selon l'une des revendications 15 à 18, caractérisée en ce que l'agent réducteur contient de l'hydrogène.

20. Application selon l'une des revendications 15 à 19, caractérisée en ce que l'agent réducteur contient des composés carbonés, notamment CO.

21. Application selon l'une des revendications 15 à 20, caractérisée en ce que l'agent réducteur contient du gaz naturel.

22. Application selon l'une des revendications 15 à 21, caractérisée en ce que l'agent réducteur contient du gaz de craquage.

23. Application du catalyseur selon l'une des revendications 1 à 4, en tant que catalyseur de réduction de $NO_x$, à la production de gaz de craquage par transformation catalytique de gaz naturel ou de pétrole.

FIG. 1

FIG. 2

FIG. 3

FIG. 4

FIG. 5

FIG.6